# FASCICULE DE BREVET EUROPEEN

(11) **EP 3 247 247 B1**
(45) Date de publication et mention de la délivrance du brevet: **28.11.2018**
(21) Numéro de dépôt: 16702758.0
(22) Date de dépôt: 21.01.2016
(51) Int. Cl.: A47J 43/046, A47J 43/07

(54) **APPAREIL ÉLECTROMÉNAGER COMPRENANT UN RÉCIPIENT DE TRAVAIL ET UN BOÎTIER MOTEUR MONTE PIVOTANT SUR UN SOCLE**
ELEKTRISCHES HAUSHALTSGERÄT MIT ARBEITSBEHÄLTER UND AUF EINEM SOCKEL SCHWENKBAR MONTIERTEN MASCHINENGEHÄUSE
HOUSEHOLD ELECTRICAL APPLIANCE COMPRISING A WORK CONTAINER AND AN ENGINE HOUSING PIVOTABLY MOUNTED ON A BASE

(30) Priorité: 23.01.2015 FR 1550555
(43) Date de publication de la demande: 29.11.2017
(73) Titulaire: SEB S.A., 69130 Ecully (FR)
(72) Inventeur: LE GRAND, Olivier, 21380 Messigny et Vantoux (FR); GALDI, Wilson, 03414-050 São Paulo - SP (BR); MERLO, Angelo Wagner, 04619-000 São Paulo - SP (BR)
(74) Mandataire: Bourrières, Patrice
(86) Numéro de dépôt international: PCT/FR2016/050125
(87) Numéro de publication internationale: WO 2016/116714

(56) Documents cités:
- EP-A1- 0 156 506
- DE-C- 975 534
- DE-U1- 20 307 144
- US-A- 2 330 860

## Description

La présente invention se rapporte au domaine technique général des appareils électroménagers de préparation culinaire comportant un récipient de travail et un boîtier renfermant un moteur pour l'entraînement d'un outil rotatif dans le fond du récipient de travail, et se rapporte plus particulièrement à un appareil électroménager de préparation culinaire dans lequel le boîtier est monté pivotant sur un socle destiné à reposer sur un plan de travail.

Il est connu, du brevet US 7717 613, un appareil de préparation culinaire comportant un récipient de travail et un boîtier renfermant un moteur pour l'entrainement d'un outil rotatif dans le fond du récipient de travail, le boîtier étant monté pivotant sur un socle destiné à reposer sur un plan de travail.

Un tel pivotement du boîtier de quelques degrés présente l'avantage de modifier la charge des ingrédients sur l'outil rotatif, ce qui permet de réduire la puissance consommée par le moteur lors de la réalisation de recettes visqueuses. Un tel pivotement du boîtier présente également l'avantage de modifier l'orientation du flux de mixage, ce qui permet d'éviter que certains ingrédients ne s'accumulent dans une zone du récipient de travail qui n'est pas balayée par le flux de mixage.

Cependant, un tel appareil présente l'inconvénient de posséder un dispositif d'articulation du boîtier sur le socle, muni de deux axes de pivotement, qui est relativement complexe et coûteux à fabriquer. De plus, ce dispositif d'articulation présente l'inconvénient d'être encombrant. Le document US-A1-2 330 860 décrit un appareil électroménager de préparation culinaire selon le préambule de la revendication 1.

Aussi, un but de la présente invention est de proposer un appareil de préparation culinaire remédiant à ces inconvénients et en particulier de proposer un appareil de préparation culinaire comportant un boîtier moteur monté pivotant sur un socle qui soit simple et économique à réaliser.

A cet effet, l'invention se rapporte à un appareil électroménager de préparation culinaire comportant un récipient de travail et un boîtier renfermant un moteur pour l'entraînement d'un outil rotatif au fond du récipient de travail, le boîtier étant monté pivotant sur un socle destiné à reposer sur un plan de travail, le boîtier comportant une paroi inférieure reposant contre une surface de guidage portée par le socle, la paroi inférieure glissant sur la surface de guidage lors du pivotement du boîtier en assurant le guidage en rotation du boîtier, ledit appareil étant caractérisé en ce que la paroi inférieure est sphérique et la surface de guidage présente une forme sphérique complémentaire.

Un tel appareil présente l'avantage de posséder un dispositif de guidage en rotation du boîtier sur le socle, par coopération des surfaces sphériques, qui est très simple à mettre en oeuvre et peu encombrant.

Selon une autre caractéristique de l'invention, le boîtier supporte le récipient de travail.

Une telle caractéristique permet d'obtenir un basculement du récipient de travail en même temps que le boîtier.

Selon une autre caractéristique de l'invention, l'outil rotatif est porté par le fond du récipient de travail et comporte un arbre d'entrainement traversant le fond du récipient de travail.

Une telle caractéristique permet d'avoir un appareil de type appareil de mixage à entrainement de l'outil par le dessous dans lequel l'extrémité supérieure du récipient de travail est dégagée de tout système d'entrainement de l'outil de travail et permet un meilleur accès à l'intérieur du récipient de travail.

Selon encore une autre caractéristique avantageuse de l'invention, le récipient de travail est fermé par un couvercle amovible, le couvercle comportant préférentiellement une ouverture pour l'introduction des aliments.

Selon une autre caractéristique de l'invention, la surface de guidage sphérique est ménagée sur une paroi support du socle comprenant une ouverture dans laquelle vient s'engager un pion, le pion pouvant se déplacer latéralement dans l'ouverture et comprenant une extrémité solidaire d'une coupelle de maintien venant se positionner sous la paroi support.

Une telle construction permet, de manière simple et économique, de rendre le boîtier solidaire du socle tout en autorisant le pivotement du boîtier sur une plage prédéterminée.

Selon une autre caractéristique de l'invention, le boîtier peut pivoter d'au moins 10° sur le socle et préférentiellement d'au moins 20°.

Une telle inclinaison du récipient de travail permet de modifier notablement la charge des ingrédients présents dans le récipient de travail sur l'outil rotatif.

Selon une autre caractéristique de l'invention, l'appareil comporte un dispositif de verrouillage permettant d'immobiliser le boîtier sur le socle dans une position de travail prédéterminée.

Selon une autre caractéristique de l'invention, le dispositif de verrouillage permet d'immobiliser le boîtier sur le socle dans une position dans laquelle le récipient de travail s'étend verticalement.

Selon une autre caractéristique de l'invention, le dispositif de verrouillage permet d'immobiliser le boîtier sur le socle dans une position dans laquelle le récipient de travail s'étend dans l'axe du socle.

Selon une autre caractéristique de l'invention, le dispositif de verrouillage comporte une bague de blocage mobile entre une position de verrouillage, dans laquelle la bague de blocage s'étend entre le socle et le boîtier et empêche le pivotement du boîtier, et une position escamotée dans laquelle la bague de blocage libère un espace autorisant le pivotement du boîtier sur le socle.

Selon une autre caractéristique de l'invention, la bague de blocage est mobile en rotation selon un mouvement hélicoïdal entre la position escamotée et la position de verrouillage.

Selon une autre caractéristique de l'invention, la bague de blocage est munie d'une languette de préhension.

Une telle caractéristique permet de faciliter la manipulation de la bague de blocage pour l'amener de la position escamotée à la position de verrouillage, et vice-versa.

Selon une autre caractéristique de l'invention, la bague de blocage est portée par le socle et se trouve en retrait dans le socle lorsqu'elle occupe la position escamotée et vient buter en bordure de la paroi inférieure du boîtier lorsqu'elle occupe la position de verrouillage.

Selon une autre caractéristique de l'invention, la bague de blocage est portée par le boîtier et se trouve en retrait dans le boîtier lorsqu'elle occupe la position escamotée et vient buter en bordure du socle lorsqu'elle occupe la position de verrouillage.

Selon une autre caractéristique de l'invention, le socle comporte des ventouses permettant de fixer le socle sur le plan de travail.

Une telle caractéristique permet de renforcer la tenue du socle sur le plan de travail et d'éviter notamment que le socle de l'appareil ne bascule lorsque le récipient de travail est incliné sur un côté.

On comprendra mieux les buts, aspects et avantages de la présente invention, d'après la description donnée ci-après de deux modes particuliers de réalisation de l'invention présentés à titre d'exemples non limitatifs, en se référant aux dessins annexés dans lesquels :
- la figure 1 est une vue en perspective d'un appareil de préparation culinaire selon un premier mode de réalisation de l'invention, le récipient de travail étant représenté en position verticale avec la bague de blocage en position escamotée ;
- la figure 2 est une vue de face de l'appareil de la figure 1 avec la bague de blocage en position de verrouillage ;
- les figures 3 et 4 sont des vues de face de l'appareil de la figure 1 lorsque le récipient occupe deux positions extrêmes de pivotement, la bague de guidage étant représentée en position escamotée ;
- La figure 5 est une vue en coupe selon la ligne V-V de la figure 2.
- la figure 6 est une vue en perspective éclatée du socle de l'appareil de la figure 1 ;
- la figure 7 est une vue de dessus du socle de l'appareil de la figure 1 représenté sans la bague de blocage ;
- les figures 8 et 9 sont des vues en perspective partiellement éclatées de l'appareil de la figure 1 ;
- la figure 10 une vue en perspective d'un appareil de préparation culinaire selon un deuxième mode de réalisation de l'invention, le récipient de travail étant représenté en position verticale avec la bague de blocage en position de verrouillage ;
- les figures 11 et 12 sont des vues en perspective du boîtier de l'appareil de la figure 10 avec la bague de blocage en position escamotée, le boîtier étant représenté respectivement en position verticale et en position inclinée vers l'avant ;
- Les figures 13A et 13B sont des vues en perspective éclatée de l'appareil de la figure 10 ;
- La figure 14 est une vue de dessus du boîtier de l'appareil de la figure 10 ;
- La figure 15 est une vue en coupe selon la ligne XV-XV de la figure 14.

Seuls les éléments nécessaires à la compréhension de l'invention ont été représentés. Pour faciliter la lecture des dessins, les mêmes éléments portent les mêmes références d'une figure à l'autre.

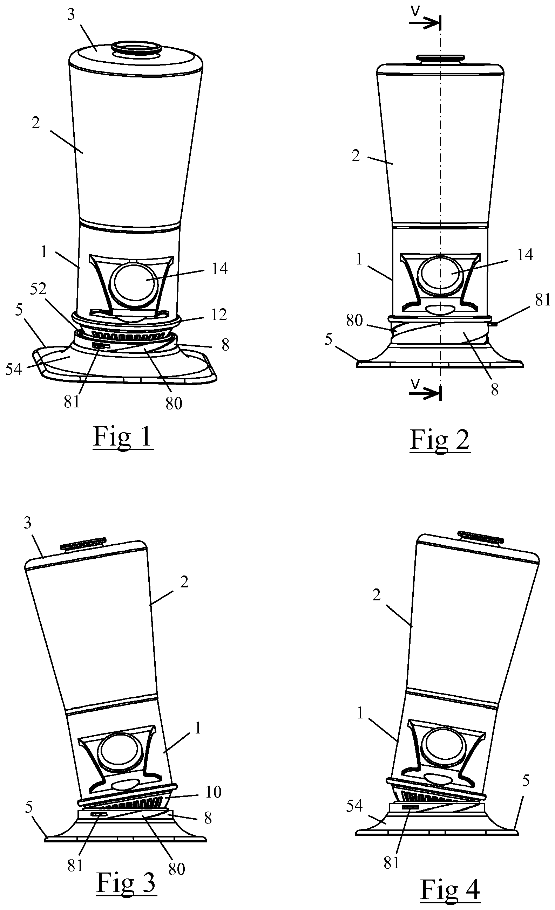

Les figures 1 à 5 représentent un appareil électroménager de préparation culinaire, de type mélangeur, selon un premier mode de réalisation de l'invention, l'appareil comportant un boîtier 1 supportant un récipient de travail 2 apte à contenir des aliments liquides ou solides.

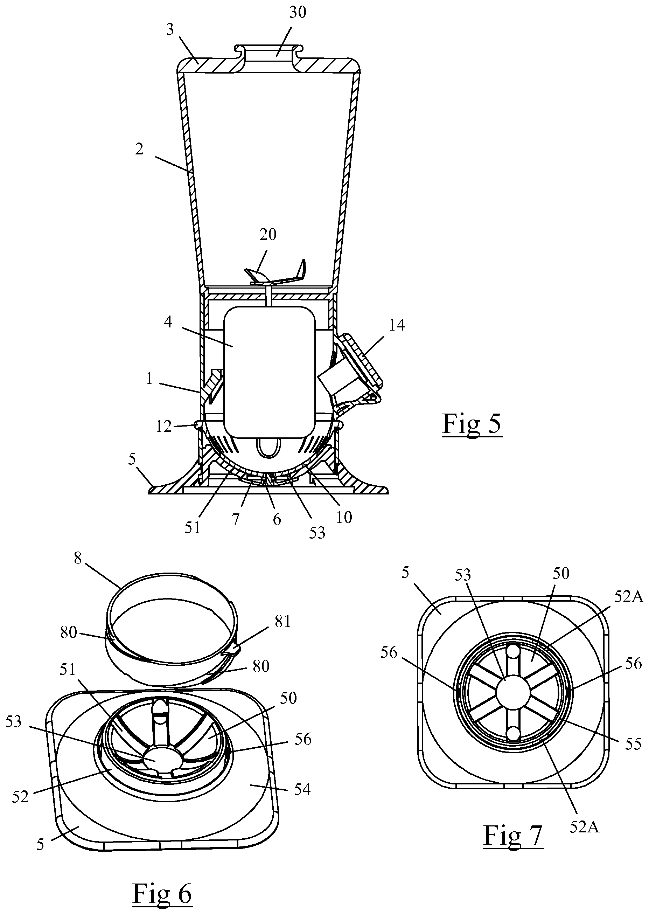

Le récipient de travail 2 est fermé par un couvercle 3 amovible comportant une ouverture 30 permettant l'introduction d'aliments à l'intérieur du récipient de travail sans avoir à soulever le couvercle 3, le boîtier 1 renfermant classiquement un moteur 4 dont la mise en route est contrôlée au moyen d'un bouton de commande 14. Le moteur 4 permet l'entraînement d'un outil rotatif 20, visible sur la figure 5, disposé dans le fond du récipient de travail 2, l'outil rotatif 20 étant supporté par le fond du récipient de travail 2 et comprenant un axe d'entrainement traversant le fond du récipient de travail 2.

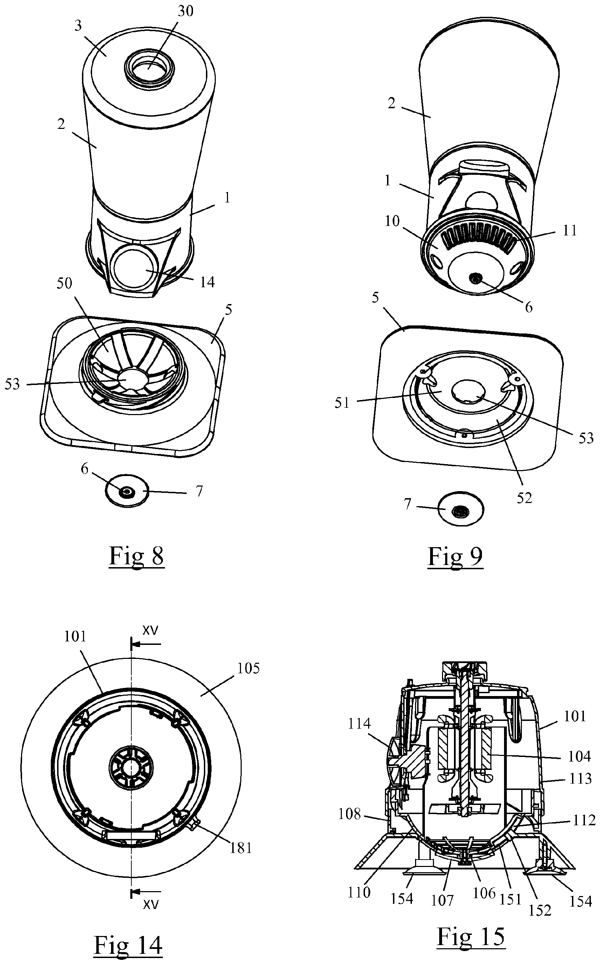

Conformément aux figures 8 et 9, le boîtier 1 est monté pivotant sur un socle 5 et comporte à cet effet une paroi inférieure 10, avantageusement munie de fentes d'aération 11, présentant la forme d'une calotte sphérique qui vient reposer contre une surface de guidage 50 sphérique du socle 5, la surface de guidage 50 présentant une forme complémentaire de celle de la paroi inférieure 10 du boîtier de manière à ce que la paroi inférieure 10 puisse glisser sur la surface de guidage 50 en engendrant un mouvement de pivotement du boîtier 1.

La surface de guidage 50 du socle est ménagée sur une paroi support 51 disposée à l'extrémité supérieure d'une paroi cylindrique 52 faisant verticalement saillie au centre du socle 5, la paroi support 51 comportant une ouverture centrale 53 dans laquelle vient s'engager un pion 6 solidaire d'une coupelle de maintien 7 venant se positionner sous la paroi support 51, la coupelle de maintien 7 étant fixée à la paroi inférieure 10 au moyen d'une vis et présentant une forme sphérique épousant le rayon de courbure de la paroi support 51.

Le pion 6 est avantageusement constitué par une première partie faisant saillie sur la paroi inférieure 10 du boîtier et par une deuxième partie faisant saillie sur la coupelle de maintien 7, le pion 6 présentant une hauteur légèrement supérieure à l'épaisseur de la paroi support 51 de manière à permettre le libre pivotement du boîtier 1 et présentant une largeur supérieure à la largeur de l'ouverture 53 pour empêcher le soulèvement du boîtier 1 par rapport au socle 5.

A titre d'exemple, la surface de guidage 50 sphérique de la paroi support 51 présente un rayon de courbure de l'ordre de 6 cm et l'ouverture centrale 53 présente un diamètre de l'ordre de 3,5 cm de manière à ce que le récipient de travail 2 puisse s'incliner de l'ordre de 10° dans toutes les directions par rapport à l'axe vertical, la coupelle de maintien 7 présentant un diamètre de l'ordre de 5 cm.

Comme on peut le voir sur la figure 6, le socle 5 comporte une embase tronconique 54 au centre de laquelle la paroi cylindrique 52 fait verticalement saillie, une rainure annulaire 55 étant ménagée entre l'extrémité supérieure de l'embase tronconique 54 et la paroi cylindrique 52.

La paroi cylindrique 52 est fixée au socle par trois pontets 52A, répartis à 120°, reliant l'extrémité inférieure de la paroi cylindrique 52 au socle 5, ces pontets 52A étant situés sensiblement à la base du socle 5 de sorte qu'il résulte au dessus de ces pontets 52A un espace au niveau de la rainure annulaire 55 dans lequel une bague de blocage 8 de forme annulaire est insérée.

La bague de blocage 8 comporte une languette de préhension 81 et comprend une surface externe munie de deux rainures 80 hélicoïdales dans lesquelles viennent s'engager deux ergots 56 portés par le socle 5, les deux ergots 56 étant disposés à 180° l'un de l'autre et coopérant avec la rainure 80 pour engendrer un déplacement vertical de la bague de blocage 8 sur une course de l'ordre de 15 mm lorsque la bague de blocage 8 est tournée de 120° depuis une position escamotée, illustrée sur les figures 1, 3 et 4, jusqu' à une position de verrouillage illustrée sur la figure 2, le socle 5 comprenant des moyens de verrouillage élastiques, non représentés sur les figures, permettant d'immobiliser la bague de blocage dans la position escamotée et dans la position de verrouillage.

Comme on peut le voir sur la figure 1, dans la position escamotée, l'extrémité supérieure de la bague de blocage 8 est en retrait par rapport à l'extrémité supérieure de la paroi cylindrique 52 de sorte qu'il résulte un espace entre l'extrémité supérieure du socle 5 et une nervure 12 ménagée en bordure périphérique de la paroi inférieure 10 du boîtier 1.

Un tel espace autorise la libre rotation du boîtier 1 sur le socle 5 dans toutes les directions jusqu'à une inclinaison de l'ordre de 10° du récipient de travail 2 par rapport à l'axe longitudinal du socle 5 normal au plan de travail, ainsi que cela est illustré sur les figures 3 et 4, le pion 6 porté par la paroi inférieure 10 venant alors buter en bordure de l'ouverture centrale 53 pour limiter l'inclinaison du récipient de travail 2.

Comme on peut le voir sur la figure 2, dans la position de verrouillage, la bague de blocage 8 vient combler l'espace entre l'extrémité supérieure du socle 5 et la nervure 12 du boîtier 1 de sorte que le bord supérieur de la bague de blocage 8 vient en appui contre la nervure 12 et bloque le boîtier 1 dans une position dans laquelle l'axe longitudinal du moteur 4 est orienté sensiblement verticalement, tout mouvement d'inclinaison du boîtier 1 par rapport à l'axe vertical étant empêché par la présence de la bague de blocage 8.

L'appareil ainsi réalisé présente donc l'avantage d'être simple et économique à réaliser et de pouvoir être utilisé soit avec la bague de blocage en position escamotée, notamment pour faciliter le mixage de préparations visqueuses, soit en position de blocage lors du mixage de préparations plus fluides.

En effet, lorsque la bague est en position escamotée, l'utilisateur peut saisir le récipient d'une main pour l'incliner selon différentes orientations jusqu'à un angle pouvant atteindre 10° par rapport à la verticale, une telle inclinaison permettant de modifier l'orientation du flux de mixage généré par la rotation de l'outil rotatif et de réduire la puissance consommée par le moteur lors de la réalisation de recettes visqueuses.

Lors du mixage de préparations plus fluides, le boîtier peut être bloqué en position verticale pour réduire le risque de débordement par le sommet du récipient de travail.

De plus, la bague de blocage présente l'avantage d'être parfaitement visible lorsqu'elle occupe la position de verrouillage, ce qui permet d'informer clairement l'utilisateur sur l'état de blocage du récipient de travail. En particulier, la bague de blocage pourra avantageusement être réalisée dans une couleur vive, distincte de celle du reste du boîtier, afin d'être encore plus visible par l'utilisateur.

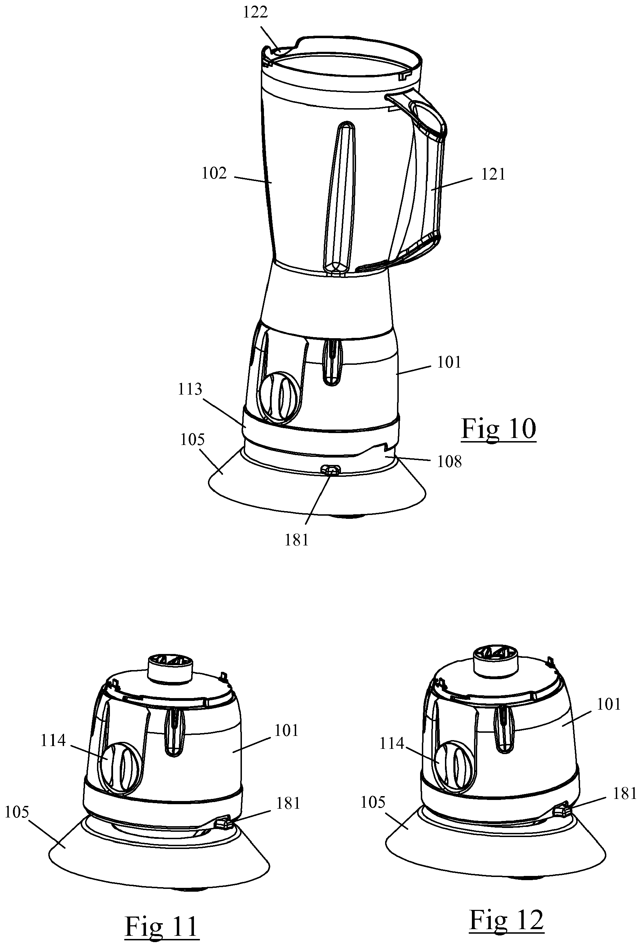

Les figures 10 à 15 illustrent un appareil de préparation culinaire, de type mélangeur, selon un deuxième mode de réalisation de l'invention.

Conformément à ces figures, l'appareil comporte un boîtier 101 supportant un récipient de travail 102 amovible apte à contenir des aliments liquides ou solides, le récipient de travail 102 comportant une enveloppe munie d'une poignée de préhension 121 et d'un bec verseur 122.

Le boîtier 101 renferme un moteur 104 dont la mise en route et la vitesse de fonctionnement sont contrôlées au moyen d'un bouton de commande 114 porté par une enveloppe externe 113 du boîtier 101, le moteur 104 permettant, de manière connue en soi, l'entraînement d'un outil rotatif porté par une embase, amovible ou non, définissant le fond du récipient de travail, non visibles sur les figures.

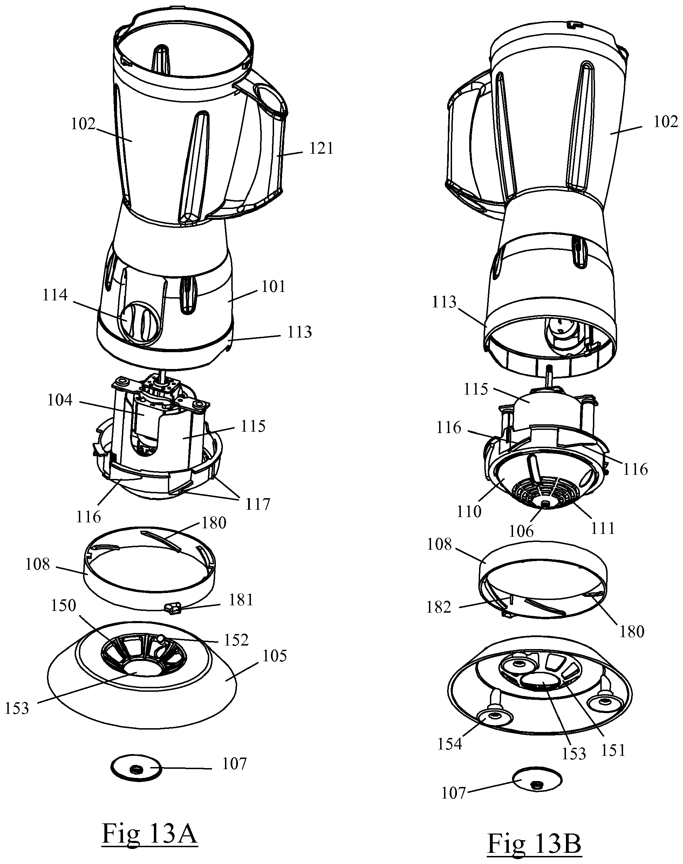

Conformément aux figures 13A et 13B, le boîtier 101 comporte une paroi inférieure 110 sphérique, munie de fentes d'aération 111, qui vient reposer contre une surface de guidage 150 portée par un socle 105, la surface de guidage 150 présentant une forme sphérique complémentaire de celle de la paroi inférieure 110 du boîtier de manière à ce que la paroi inférieure 110 puisse glisser sur la surface de guidage 150 en engendrant un mouvement de pivotement du boîtier 101.

La surface de guidage 150 du socle est ménagée sur une paroi support 151 ajourée comportant une ouverture centrale 153 présentant un diamètre de l'ordre de 4 cm dans laquelle vient s'engager un pion 106 solidaire d'une coupelle de maintien 107 présentant des caractéristiques semblables à la coupelle de maintien 7 décrite pour le premier mode de réalisation.

Dans ce deuxième mode réalisation, le socle 105 comporte des ventouses 154 permettant de fixer le socle 105 sur un plan de travail et la paroi support 151 comprend un ergot 152 en saillie, visible sur les figures 13A et 15, qui vient s'engager dans une rainure 112 radiale ménagée dans la paroi inférieure 110 du boîtier de manière à ce que le mouvement de pivotement du boîtier 101 sur le socle 105 ne puisse s'effectuer que vers l'avant et/ou vers l'arrière de l'appareil, sur une inclinaison de l'ordre de 15° par rapport la verticale.

La paroi inférieure 110 du boîtier est intégrée à une pièce support 115 sur laquelle est fixé le moteur 104, la pièce support 115 présentant un diamètre légèrement inférieur à celui de l'enveloppe externe 113 du boîtier de manière à ce qu'il résulte un espace entre la pièce support 115 et l'enveloppe externe 113 du boîtier dans lequel une bague de blocage 108 de forme annulaire est insérée.

La bague de blocage 108 comporte un languette de préhension 181 et comprend une surface interne munie de nervures hélicoïdales 180 qui viennent coopérer avec des pistes de guidage 116 hélicoïdales ménagées sur une paroi périphérique de la pièce support 115 pour engendrer un déplacement vertical de la bague de blocage 108 sur une course de l'ordre de 15 mm lorsque la bague de blocage est tournée de 45° depuis une position escamotée, illustrée sur les figures 11 et 12, jusqu'à une position de verrouillage illustrée sur la figure 10.

Dans la position escamotée, l'extrémité inférieure de la bague de blocage 108 est en retrait par rapport au bord supérieur du socle 105 de sorte qu'il résulte un espace sous l'enveloppe externe 113 du boîtier autorisant la libre rotation du boîtier 101 vers l'avant ou vers l'arrière jusqu'à une inclinaison de l'ordre de 15° du récipient de travail 102 par rapport au socle 105.

Dans la position de verrouillage, la bague de blocage 108 vient combler l'espace entre le boîtier 101 et le socle 105 de sorte que le bord inférieur de la bague de blocage 108 vient en appui contre le socle 105 et bloque le boîtier 101 dans une position dans laquelle l'axe longitudinal du moteur 104 est orienté sensiblement verticalement, tout mouvement d'inclinaison du boîtier 101 par rapport à l'axe vertical étant empêché par la présence de la bague de blocage 108.

Comme on peut le voir sur la figure 13B, la bague de blocage 108 comporte également une nervure de verrouillage 182 venant s'engager élastiquement dans des rainures 117 ménagées sur la paroi périphérique de la pièce support 115 pour immobiliser en rotation la bague de blocage 108 lorsque cette dernière occupe la position escamotée et la position de verrouillage.

L'appareil réalisé selon ce deuxième mode de réalisation présente également l'avantage d'être simple et économique à réaliser et de pouvoir être utilisé soit avec la bague de blocage en position escamotée, notamment pour faciliter le mixage de préparations visqueuses, soit en position de blocage lors du mixage de préparations plus fluides.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'appareil pourra comporter des moyens de rappel tendant à ramener automatiquement le récipient de travail dans une position verticale lorsqu'aucune pression n'est exercée par l'utilisateur sur le récipient de travail.

Ainsi, dans une variante de réalisation non représentée, le socle pourra recevoir un lest à la place, ou en complément, des ventouses pour assurer une bonne stabilité de l'appareil lorsque le récipient est incliné par rapport au socle.

Ainsi dans une variante de réalisation du deuxième mode de réalisation, non représentée, la paroi support du socle pourra être démunie d'ergot de manière à ce que le boîtier puisse pivoter dans toutes les directions sur le socle lorsque la bague de blocage occupe la position escamotée, comme c'est le cas pour le premier mode de réalisation.

## Revendications

1. Appareil électroménager de préparation culinaire comportant un récipient de travail (2;102) et un boîtier (1;101) renfermant un moteur (4;104) pour l'entraînement d'un outil rotatif (20) au fond du récipient de travail (2;102), le boîtier (1;101) étant monté pivotant sur un socle (5;105) destiné à reposer sur un plan de travail, le boîtier (1;101) comportant une paroi inférieure (10;110) reposant contre une surface de guidage (50;150) portée par le socle (5;105), la paroi inférieure (10;110) glissant sur la surface de guidage (50; 150) lors du pivotement du boîtier (1;101) en assurant le guidage en rotation du boîtier (1;101) **caractérisé en ce que** la paroi inférieure (10;110) est sphérique et la surface de guidage (50;150) présente une forme sphérique complémentaire.

2. Appareil selon la revendication 1, **caractérisé en ce que** la surface de guidage (50;150) sphérique est ménagée sur une paroi support (51;151) du socle comprenant une ouverture (53;153) dans laquelle vient s'engager un pion (6;106), ledit pion (6;106) pouvant se déplacer latéralement dans l'ouverture (53;153) et comprenant une extrémité solidaire d'une coupelle de maintien (7;107) venant se positionner sous la paroi support (51;151).

3. Appareil selon l'une quelconque des revendications 1 à 2, **caractérisé en ce que** le boîtier (1;101) peut pivoter d'au moins 10° sur le socle (5;105) et préférentiellement d'au moins 20°.

4. Appareil selon l'une quelconque des revendications 1 à 3, **caractérisé en ce qu'**il comporte un dispositif de verrouillage permettant d'immobiliser le boîtier (1;101) sur le socle (5;105) dans une position de travail prédéterminée.

5. Appareil selon la revendication 4, **caractérisé en ce que** le dispositif de verrouillage permet d'immobiliser le boîtier (1;101) sur le socle (5;105) dans une position dans laquelle le récipient de travail (2;102) s'étend verticalement.

6. Appareil selon la revendication 5, **caractérisé en ce que** le dispositif de verrouillage comporte une bague de blocage (8;108) mobile entre une position de verrouillage, dans laquelle la bague de blocage (8;108) s'étend entre le socle (5;105) et le boîtier (1;101) et empêche le pivotement du boîtier, et une position escamotée dans laquelle la bague de blocage (8;108) libère un espace autorisant le pivotement du boîtier (1;101) sur le socle (5;105).

7. Appareil selon la revendication 6, **caractérisé en ce que** la bague de blocage (8;108) est mobile en rotation selon un mouvement hélicoïdal entre la position escamotée et la position de verrouillage.

8. Appareil selon la revendication 7, **caractérisé en ce que** la bague de blocage (8;108) est munie d'une languette de préhension (81;181).

9. Appareil selon l'une quelconque des revendications 6 à 8, **caractérisé en ce que** la bague de blocage (8;108) est portée par le socle (5;105) et se trouve en retrait dans le socle (5;105) lorsqu'elle occupe la position escamotée et vient buter en bordure de la paroi inférieure (10;110) du boîtier (1;101) lorsqu'elle occupe la position de verrouillage.

10. Appareil selon l'une quelconque des revendications 6 à 8, **caractérisé en ce que** la bague de blocage (8;108) est portée par le boîtier (1;101) et se trouve en retrait dans le boîtier (1;101) lorsqu'elle occupe la position escamotée et vient buter en bordure du socle (5;105) lorsqu'elle occupe la position de verrouillage.

11. Appareil selon l'une quelconque des revendications 1 à 10, **caractérisé en ce que** le socle (105) comporte des ventouses (154) permettant de fixer le socle (105) sur le plan de travail.

## Patentansprüche

1. Elektrisches Gerät für die Nahrungsmittelzubereitung, das einen Arbeitsbehälter (2; 102) und ein Gehäuse (1; 101) aufweist, das einen Motor (4; 104) zum Antrieb eines rotierenden Werkzeugs (20) am Boden des Arbeitsbehälters (2; 102) umschließt, wobei das Gehäuse (1; 101) an einem Sockel (5; 105) schwenkbar angebracht ist, der dazu bestimmt ist, auf einer Arbeitsfläche aufzuliegen, wobei das Gehäuse (1; 101) eine untere Wand (10; 110) aufweist, die auf einer Führungsfläche (50; 150), die von dem Sockel (5; 105) getragen wird, aufliegt, wobei die untere Wand (10; 110) auf der Führungsfläche (50; 150) während des Schwenkens des Gehäuses (1; 101) gleitet, wodurch die Drehführung des Gehäuses (1; 101) sichergestellt wird, **dadurch gekennzeichnet, dass** die untere Wand (10; 110) kugelförmig ist, und dass die Führungsfläche (50; 150) eine komplementäre kugelförmige Form aufweist.

2. Gerät nach Anspruch 1, **dadurch gekennzeichnet, dass** die kugelförmige Führungsfläche (50; 150) an einer Stützwand (51; 151) des Sockels vorgesehen ist, die eine Öffnung (53; 153) umfasst, in die ein Zapfen (6; 106) eingreift, wobei sich der Zapfen (6; 106) seitlich in der Öffnung (53; 153) bewegen kann und ein Ende umfasst, das an einer Halteschale (7; 107) befestigt ist, die unter der Stützwand (51; 151) positioniert ist.

3. Gerät nach einem der Ansprüche 1 bis 2, **dadurch gekennzeichnet, dass** das Gehäuse (1; 101) um mindestens 10° und vorzugsweise mindestens 20° an dem Sockel (5; 105) schwenkbar ist.

4. Gerät nach einem der Ansprüche 1 bis 3, **dadurch gekennzeichnet, dass** es eine Verriegelungsvorrichtung aufweist, die es ermöglicht, das Gehäuse (1; 101) an dem Sockel (5; 105) in einer vorbestimmten Arbeitsposition zu immobilisieren.

5. Gerät nach Anspruch 4, **dadurch gekennzeichnet, dass** es die Verriegelungsvorrichtung ermöglicht, das Gehäuse (1; 101) auf dem Sockel (5; 105) in einer Position zu immobilisieren, in der sich der Arbeitsbehälter (2; 102) vertikal erstreckt.

6. Gerät nach Anspruch 5, **dadurch gekennzeichnet, dass** die Verriegelungsvorrichtung einen Blockierring (8; 108) aufweist, der zwischen einer verriegelten Position, in der sich der Blockierring (8; 108) zwischen dem Sockel (5; 105) und dem Gehäuse (1; 101) erstreckt und ein Schwenken des Gehäuses verhindert, und einer zurückgezogenen Position bewegbar ist, in der der Blockierring (8; 108) einen Raum freigibt, der ein Schwenken des Gehäuses (1; 101) auf dem Sockel (5; 105) ermöglicht.

7. Gerät nach Anspruch 6, **dadurch gekennzeichnet, dass** der Blockierring (8; 108) in einer Schraubenbewegung zwischen der zurückgezogenen Position und der verriegelten Position drehbar ist.

8. Gerät nach Anspruch 7, **dadurch gekennzeichnet, dass** der Blockierring (8; 108) mit einer Grifflasche (81; 181) versehen ist.

9. Gerät nach einem der Ansprüche 6 bis 8, **dadurch gekennzeichnet, dass** der Blockierring (8; 108) von dem Sockel (5; 105) getragen wird und sich in dem Sockel (5; 105) zurückgezogen befindet, wenn er die zurückgezogene Position einnimmt, und an dem Rand der unteren Wand (10; 110) des Gehäuses (1; 101) anliegt, wenn er die verriegelte Position einnimmt.

10. Gerät nach einem der Ansprüche 6 bis 8, **dadurch gekennzeichnet, dass** der Blockierring (8; 108) von dem Gehäuse (1; 101) getragen wird und sich zurückgezogen in dem Gehäuse (1; 101) befindet, wenn er die zurückgezogene Position einnimmt, und an dem Rand des Sockels (5; 105) anliegt, wenn er die verriegelte Position einnimmt.

11. Gerät nach einem der Ansprüche 1 bis 10, **dadurch gekennzeichnet, dass** der Sockel (105) Saugnäpfe (154) aufweist, die es ermöglichen, den Sockel (105) auf der Arbeitsebene zu befestigen.

## Claims

1. Household electrical appliance for food preparation comprising a work container (2; 102) and a housing (1; 101) enclosing a motor (4; 104) for the driving of a rotary tool (20) at the bottom of the work container (2; 102), the housing (1; 101) being pivotably mounted on a base (5; 105) intended for resting on a work surface, the housing (1; 101) comprising a lower wall (10; 110) resting against a guiding surface (50; 150) supported by the base (5; 105), the lower wall (10; 110) sliding over the guiding surface (50; 150) during the pivoting of the housing (1; 101) providing the guiding in rotation of the housing (1; 101) **characterised in that** the lower wall (10; 110) is spherical and the guiding surface (50; 150) has a complementary spherical shape.

2. Appliance according to claim 1, **characterised in that** the spherical guiding surface (50; 150) is arranged on a support wall (51; 151) of the base comprising an opening (53; 153) wherein a pin (6; 106) is engaged, said pin (6; 106) being able to be moved laterally in the opening (53; 153) and comprising an end integral with a retainer cup (7; 107) that is positioned under the support wall (51; 151).

3. Appliance according to any of claims 1 to 2, **characterised in that** the housing (1; 101) can pivot by at least 10° on the base (5; 105) and preferably by at least 20°.

4. Appliance according to any of claims 1 to 3, **characterised in that** it comprises a device for locking that makes it possible to immobilise the housing (1; 101) on the base (5; 105) in a predetermined work position.

5. Appliance according to claim 4, **characterised in that** the device for locking makes it possible to immobilise the housing (1; 101) on the base (5; 105) in a position wherein the work container (2; 102) extends vertically.

6. Appliance according to claim 5, **characterised in that** the device for locking comprises a locking ring (8; 108) mobile between a locking position, wherein the locking ring (8; 108) extends between the base (5; 105) and the housing (1; 101) and prevents the pivoting of the housing, and a retracted position wherein the locking ring (8; 108) releases a space that allows for the pivoting of the housing (1; 101) on the base (5; 105).

7. Appliance according to claim 6, **characterised in that** the locking ring (8; 108) is mobile in rotation according to a helicoidal movement between the retracted position and the locking position.

8. Appliance according to claim 7, **characterised in that** the locking ring (8; 108) is provided with a gripping tab (81; 181).

9. Appliance according to any of claims 6 to 8, **characterised in that** the locking ring (8; 108) is supported by the base (5; 105) and is retracted in the base (5; 105) when it occupies the retracted position and abuts against the edge of the lower wall (10; 110) of the housing (1; 101) when it occupies the locking position.

10. Appliance according to any of claims 6 to 8, **characterised in that** the locking ring (8; 108) is supported by the housing (1; 101) and is retracted in the housing (1; 101) when it occupies the retracted position and abuts against the edge of the base (5; 105) when it occupies the locking position.

11. Appliance according to any of claims 1 to 10, **characterised in that** the base (105) comprises suction cups (154) that make it possible to fix the base (105) on the work surface.
